# DEMANDE DE BREVET EUROPEEN

(11) **EP 1 115 062 A1**
(43) Date de publication de la demande: **11.07.2001**
(21) Numéro de dépôt: 00403621.6
(22) Date de dépôt: 21.12.2000
(51) Int. Cl.: G06F 9/54

(54) **Dispositif pour changer dynamiquement le moyen de communication utilisé pour une communication entre deux agents logiciels**

(30) Priorité: 30.12.1999 FR 9916722
(71) Demandeur: ALCATEL, 75008 Paris (FR)
(72) Inventeur: Lachaud, Philippe, 91120 Palaiseau (FR); Daurensan, Véronique, 92160 Antony (FR)
(74) Mandataire: Lamoureux, Bernard

(57) **Abrégé**

L'invention est relative à un dispositif pour changer le moyen de communication utilisé pour une communication entre deux agents logiciels. Elle se caractérise en ce que les agents logiciels comportent :
- D'une part, un module de communication permettant d'accéder au moyen de communication,
- Et d'autre part, des moyens pour recevoir un nouveau module de communication de la part d'un serveur de communication.

## Description

La présente invention concerne un dispositif permettant de changer de façon dynamique, le moyen de communication entre deux agents logiciels, au sein d'une architecture distribuée. L'invention s'applique particulièrement bien aux architectures à agents distribuées.

On appelle agent, ou agent logiciel, tout morceau de code objet, ayant une certaine autonomie et indépendance. Du fait de cette indépendance, la communication entre plusieurs agents peut poser des problèmes.
Dans les architectures logicielles distribuées de l'état de la technique, les agents logiciels communiquent entre eux par des moyens de communication préétablis. Ces canaux peuvent être de différentes natures,

Il peut s'agir de moyens de communications point à point, ou de moyens de communication par diffusion (ou *broadcasting,* selon la terminologie en langue anglaise), ou encore d'autres types de moyens de communication.
Dans le premier cas, les données émises par un premier agent logiciel ne sont reçues que par un unique second agent logiciel à travers un moyen de communication dédié.
Dans le second cas, les données émises par le premier agent logiciel sont susceptibles d'être reçues par un ou plusieurs agents logiciels.

Le moyen de communication peut être un canal de communication asynchrone comme un canal de notification. Ce type de moyens de communication est par exemple utilisé de façon très habituelle dans le cadre d'une architecture conforme aux spécifications CORBA (*Common Object Request Broker Architecture*) telles que définies par l'OMG (*Open Management Group*).

Une autre possibilité de mise en oeuvre du moyen de communication est de type "tableau noir" : un agent logiciel écrit les données à communiquer dans une zone mémoire dédiée, que le ou les agents logiciels destinataires lisent de façon périodique.
Bien évidemment, ces quelques exemples de moyens de communication ne forment pas une liste exhaustive des procédés de communication utilisable entre deux agents logiciels.

Toujours est-il qu'il est important de noter que, dans l'état de la technique, les moyens de communication sont toujours fixés à la conception du système logiciel. Autrement dit, il n'est prévu aucun dispositif pour permettre la modification des moyens de communication durant la durée de vie du système.

Or, le besoin peut exister de modifier, de façon dynamique (c'est-à-dire durant la durée de vie du système), les moyens de communication entre plusieurs agents logiciels d'un système.
Ce besoin peut provenir de l'indisponibilité du précédant moyen de communication. Cette indisponibilité peut par exemple être le résultat de la rupture d'une connexion dans le réseau informatique dans lequel les agents logiciels émetteur et destinataire sont mis en oeuvre.
Le besoin peut aussi provenir d'une nécessité de maintenance du système. Par exemple, afin de corriger un problème dans le système, on peut être amené à désirer connaître les informations transitant sur un moyen de communication. Auquel cas, la modification du moyen de communication est nécessaire afin de le rendre lisible par un opérateur, ou par une application logicielle tierce.

Un autre besoin peut provenir d'un souci de répartition de charge. Si un moyen de communication se trouve, momentanément ou de façon permanente, saturé en trafic, alors il peut être bénéfique d'en changer afin d'augmenter les performances du système.

La présente invention a donc pour but de remplir ces besoins en proposant un dispositif pour modifier, de façon dynamique, le moyen de communication utilisé entre deux agents logiciels pour la transmission de données.
Pour ce faire, l'invention prévoit d'une part le dispositif comporte un serveur de communication, et d'autre part que les agents logiciels comportent :
- Un module de communication permettant d'accéder audit moyen de communication,
- Des moyens pour recevoir un nouveau module de communication de la part de ce serveur de communication.

L'invention a aussi pour objet, un procédé permettant d'utiliser les agents logiciels et le serveur de sécurité ainsi définis. Ce procédé comporte les étapes suivantes :
- émission par les agents logiciels d'un message à l'adresse d'un serveur de communication, signifiant ladite rupture,
- émission par le serveur de modules de communication à l'adresse des agents logiciels, les modules de communication étant prévus pour permettre l'accès à un autre moyen de communication,
- utilisation des modules de communication pour continuer les communications entre lesdits agents logiciels.

Ainsi, selon la présente invention, il est non seulement possible de changer de façon dynamique, le moyen de communication utilisé, mais de surcroît, il est possible d'en changer jusqu'à la nature. Ainsi, une communication qui, précédemment, utilisait un canal de notification, peut, dynamiquement, opter pour une communication de type "tableau noir".

L'invention et ses avantages apparaîtront de façon plus claire dans la description qui va suivre en relation avec les figures jointes.
La figure 1 illustre une mise en oeuvre de l'invention.
La figure 2 schématise le déroulement d'un scénario mettant en oeuvre les mécanismes de l'invention.

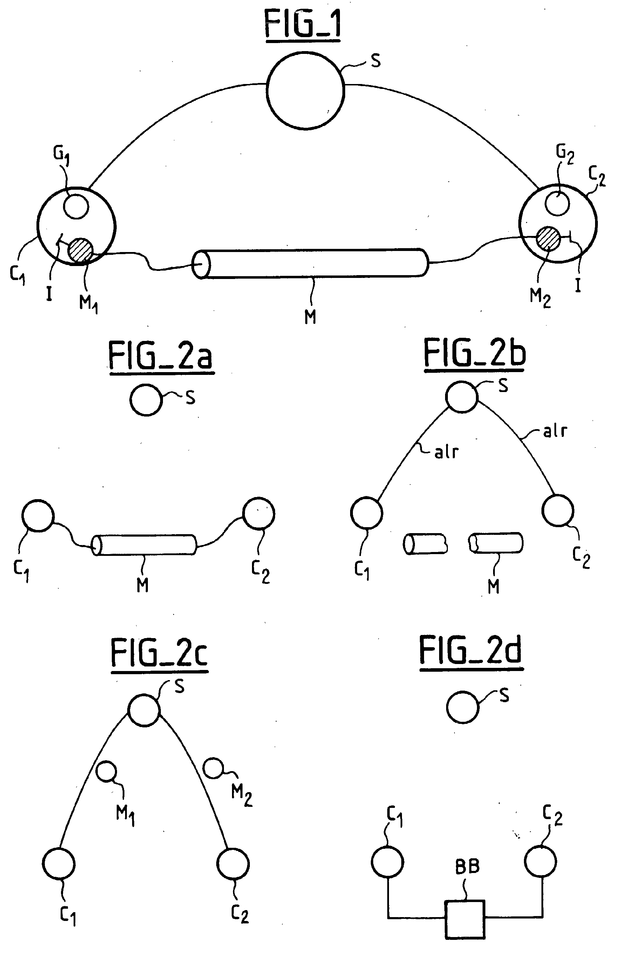

Sur la figure 1, deux agents logiciels, C₁ et C₂ communiquent au travers d'un moyen de communication M. Ces agents logiciels peuvent par exemple être des agents, c'est-à-dire des entités logicielles autonomes ayant à leur disposition leur propre ressource d'exécution (ou *thread,* dans la terminologie de langue anglaise.)
Le moyen de communication est par exemple un canal de notification. Afin d'utiliser ce canal de communication, les agents logiciels font appels aux modules de communication M₁ et M₂.

En fait, les agents logiciels n'ont pas besoin de connaître la nature du moyen de communication, ni la façon d'y accéder, c'est-à-dire, l'interface de programmation (ou API pour Application Programming Interface) qu'il présente.
Selon une caractéristique de l'invention, tous les modules de communication comportent une même interface de programmation, I, qu'ils présentent aux agents logiciels. Aussi, ceux-ci peuvent accéder aux moyens de communication d'une façon unique, au travers de cette unique interface de programmation, sans se préoccuper de l'interface de programmation du moyen de communication lui-même.

Autrement dit, les modules de communication ont un rôle de traduction entre une première interface de programmation, unique, avec les agents logiciels, et une seconde interface de programmation, spécifique au moyen de communication utilisé.
Cette première interface unique peut par exemple comporter des fonctions de type « envoyer message » et « recevoir message ». Le module de communication a pour rôle de mettre en oeuvre ces fonctions et de mettre en forme les données à transmettre, en fonction de la nature du moyen de communication utilisé.

Les agents logiciels C₁ et C₂ comportent par ailleurs des moyens G₁, G₂ pour recevoir de nouveaux modules de communication de la part d'un serveur de communication S.
Ce serveur de communication peut être unique pour l'ensemble du système ou bien il peut exister plusieurs serveurs de communication ayant des moyens d'échanger des informations entre eux.
Les modules de communication transmis par lé (ou les) serveur(s) de communication peuvent remplacer les anciens modules de communication (M₁ et M₂). Comme dit précédemment, ils possèdent préférentiellement une interface de programmation identique à celles des modules précédents, mais permettent par exemple l'accès à un autre moyen de communication (non représenté).
Comme également dit précédemment, cet autre moyen de communication peut être de la même nature que le précédent, c'est-à-dire ici un canal de notification. Dans ce cas, la cause du changement de moyen de notification peut être l'encombrement du premier canal de notification, ou bien sa rupture due à un accident de système, ou encore parce qu'on désire utiliser un canal apportant une autre qualité de service.
Cet autre moyen de communication peut aussi être de nature différente, par exemple, de type « tableau noir ».

Afin de permettre la transmission des modules de communication (qui sont des éléments logiciels), ceux-ci sont préférentiellement codés en un langage tel Java qui permet de faire migrer du code objet à travers un système informatique distribué. Dans ce cas, il est possible pour les agents logiciels de charger de façon dynamique les modules de communication en utilisant ce mécanisme particulier du langage Java.
Il est aussi possible de prévoir que les codes objets correspondants aux différents modules de communication qui peuvent être utilisés, sont stockés localement. Le serveur de communication ne transmet alors que des références désignant un module de communication parmi cet ensemble.

Les figures 2a, 2b, 2c et 2d illustrent le cas où le changement de moyen de notification est effectué à l'initiative des agents logiciels à la suite d'une rupture du premier moyen de communication.
Sur la figure 2a, les agents logiciels C₁ et C₂ communiquent par un canal de notification M.
Pour une raison quelconque, ce canal de notification est rompu et n'est plus à même de transmettre les informations entre les deux agents logiciels.
Sur la figure 2b, les deux agents logiciels prennent conscience de la rupture du canal de notification (par exemple, par non réception d'un accusé de réception de ce canal de notification à la suite d'une émission de données). A la suite de cette prise de conscience, les agents logiciels émettent des messages alr, à destination du serveur de communication S, signifiant la rupture du moyen de communication entre les deux agents logiciels C₁ et C₂.
En réponse à ces deux messages, le serveur de communication S émet, à destination des deux agents logiciels C₁ et C₂, deux modules de communication M₁ et M₂.

Ces deux modules de communication sont prévus pour utiliser un moyen de communication BB de type « tableau noir » (ou *blackboard,* selon la terminologie en langue anglaise.) Ils sont ensuite intégrés aux agents logiciels, par exemple par chargement dynamique comme indiqué précédemment.

Sur la figure 2d, les deux agents logiciels communiquent de nouveau, mais cette fois-ci au travers d'un nouveau moyen de communication (de type « tableau noir ») en utilisant les deux modules de communication, M₁ et M₂ reçus du serveur de communication S.

Selon une mise en oeuvre de l'invention, le serveur de communication peut, de sa propre initiative transmettre des modules de communication aux agents logiciels, provoquant ainsi le changement du moyen de communication utilisé pour leur communication.
Le serveur de communication peut provoquer un tel changement par exemple en suivant une loi prédéterminée. Par exemple, il peut changer de moyens de communication tous les 5 messages, en partant de l'hypothèse empirique, que cela permet ainsi de minimiser les encombrements des différents moyens de communication du système.
Le changement peut aussi être provoqué par le serveur de communication, en réaction à une alerte due à un encombrement d'un moyen de communication particulier.
Dans le premier cas, il s'agit d'une action préventive, visant à éviter les encombrements, tandis que ce deuxième cas vise à minimiser les conséquences d'un tel dépassement.

## Revendications

1. Dispositif pour changer le moyen de communication utilisé pour une communication entre deux agents logiciels, caractérisé en ce qu'il comporte en outre un serveur de communication, et en ce que lesdits agents logiciels comportent :
• Un module de communication permettant d'accéder audit moyen de communication,
• Des moyens pour recevoir un nouveau module de communication de la part dudit serveur de communication.

2. Dispositif selon la revendication 1, dans lequel lesdits agents logiciels comportent de surcroît des moyens pour émettre une requête vers ledit serveur de communication provoquant la transmission dudit nouveau module de communication.

3. Dispositif selon l'une des revendications 1 ou 2, dans lequel ledit serveur de communication comporte des moyens pour recevoir des requêtes de changement de moyens de communication, de la part d'une interface homme machine, provoquant la transmission dudit nouveau module de communication.

4. Dispositif selon l'une des revendications précédentes, dans lequel ledit serveur de communication comporte en outre des moyens pour décider, en fonction de règles internes, de la transmission dudit nouveau module de communication.

5. Dispositif selon l'une des revendications précédentes, dans lequel ledit module de communication est dynamiquement chargé par lesdits agents logiciels.

6. Dispositif selon l'une des revendications précédentes, dans lequel lesdits agents logiciels et lesdits modules de communication communiquent au travers d'une interface de programmation unique.

7. Procédé pour corriger une rupture d'un moyen de communication, utilisé entre deux agents logiciels, caractérisé en ce qu'il comporte les étapes ordonnées suivantes :
• émission par lesdits agents logiciels d'un message à l'adresse d'un serveur de communication, signifiant ladite rupture,
• émission par ledit serveur de modules de communication à l'adresse desdits agents logiciels, lesdits modules de communication étant prévus pour permettre l'accès à un autre moyen de communication,
• utilisation desdits modules de communication pour continuer les communications entre lesdits agents logiciels.
